(19) Europäisches Patentamt

European Patent Office

Office européen des brevets

(11) **EP 2 711 729 B1**

(12) **FASCICULE DE BREVET EUROPEEN**

(45) Date de publication et mention de la délivrance du brevet:
**21.08.2019 Bulletin 2019/34**

(21) Numéro de dépôt: **13185026.5**

(22) Date de dépôt: **18.09.2013**

(51) Int Cl.:
*G01S 7/02* *(2006.01)*    *G01S 7/38* *(2006.01)*
*G01S 13/68* *(2006.01)*    *F41H 13/00* *(2006.01)*
*H01Q 3/26* *(2006.01)*    *H01Q 3/32* *(2006.01)*
*H01Q 21/00* *(2006.01)*    *H01Q 21/06* *(2006.01)*
*G01S 13/44* *(2006.01)*

(54) **Antenne réseau pour l'émission d'ondes électromagnétiques et procédé de détermination de la direction d'une cible**

Netzantenne zum Aussenden von elektromagnetischen Wellen, und Verfahren zur Richtungsbestimmung eines Ziels

Network antenna for emitting electromagnetic waves and method for determining the direction of a target

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2012 FR 1202522**

(43) Date de publication de la demande:
**26.03.2014 Bulletin 2014/13**

(73) Titulaire: **Thales**
**92200 Neuilly Sur Seine (FR)**

(72) Inventeurs:
• **Brasile, Jean-Pierre**
**91110 Gif-sur-Yvette (FR)**
• **Tchoffo-Talom, Friedman**
**92622 Gennevilliers Cedex (FR)**
• **Sirot, Patrick**
**92622 Gennevilliers Cedex (FR)**
• **Chauchat, Anne-Sophie**
**92622 Gennevilliers Cedex (FR)**

(74) Mandataire: **Lavoix**
**2, place d'Estienne d'Orves**
**75441 Paris Cedex 09 (FR)**

(56) Documents cités:
| | |
|---|---|
| **GB-A- 2 360 134** | **JP-A- 2010 085 167** |
| **US-A- 4 529 990** | **US-A- 4 868 917** |
| **US-A1- 2003 095 067** | **US-A1- 2007 139 247** |
| **US-A1- 2009 102 704** | |

**Description**

L'invention concerne un procédé de détermination d'au moins une composante de la direction d'une cible par une antenne réseau pour l'émission d'ondes électromagnétique. Elle se rapporte également à une antenne adaptée pour la mise en oeuvre de ce procédé.

L'invention s'applique au domaine des armes hyperfréquences destinées au brouillage à très forte puissance, et à la destruction d'équipements électroniques.

On connait, notamment de l'article de X.Q. Li intitulé "The high power radial line helical circular array antenna: theory and development", une antenne ayant une surface d'émission présentant une forme générale de disque. Suivant sa surface d'émission, l'antenne comporte un ensemble d'antennes élémentaires régulièrement réparties. Ces antennes élémentaires sont adaptées pour former ensemble un champ électromagnétique cohérent dont la direction de propagation est perpendiculaire à la surface d'émission.

Afin d'alimenter les éléments d'antenne, il est connu d'utiliser une source de rayonnement électromagnétique, constituée par exemple d'un MILO pour « Magnetically Insulated Line Oscillator » en anglais, d'un carcinotron, d'un klystron relativiste ou d'un magnétron de forte puissance, et un guide d'ondes pour l'acheminement du flux électromagnétique de la source aux éléments d'antenne.

De manière connue, l'antenne comprend des moyens de guidage du rayonnement électromagnétique généré par la source jusqu'à une entrée pouvant être perpendiculaire à la surface d'émission, et des moyens de répartition du rayonnement électromagnétique amené sur l'intégralité de la surface d'émission. Dans l'article de X.Q. Li, ces moyens de répartition sont constitués par un guide d'ondes comportant deux lignes de transmission radiale du champ en forme de couronne reliées à leurs périphéries extérieures par un guide d'ondes cylindrique s'étendant perpendiculairement aux lignes de transmission radiale afin de guider le flux électromagnétique sous vide en réduisant les phénomènes de claquage.

Une telle antenne est généralement dénommée antenne à transmission radiale (« radial line antenna » en anglais).

Cette antenne est avantageuse, dans la mesure où elle permet d'émettre des ondes électromagnétiques de forte puissance, typiquement de puissance crête supérieure à 10 kW. Toutefois, cette antenne manque de flexibilité dans son utilisation. Tout d'abord, elle ne peut émettre que des ondes ayant un unique type de polarisation. Dans l'article de X.Q. Li, cette polarisation est circulaire. Ensuite, cette antenne ne peut émettre que dans une unique direction d'émission, alors qu'il serait souhaitable, dans certaines utilisations, de pouvoir émettre dans deux directions d'émission distinctes simultanément.

Dans l'état de la technique, ces inconvénients sont contournés par la cohabitation, au sein d'une même arme hyperfréquence, de plusieurs antennes, certaines étant adaptées pour émettre avec des polarisations différentes, d'autres pour émettre dans des directions d'émission différentes. Un module de commande gère l'ensemble des antennes, et détermine quelles antennes activer en fonction des ondes que l'on souhaite émettre. Chaque antenne a généralement sa propre source, et sa propre surface d'émission.

Il est également connu du document US-A-4 868 917 un radar transmettant des signaux à polarisation circulaire à droite et sélectionnant les composantes à polarisation circulaire à droite des retours correspondants. Le radar transmet également des signaux à polarisation circulaire à gauche et sélectionne les composantes à polarisation circulaire à gauche des retours correspondants.

Le document JP A-2010/085167 décrit aussi un système comportant deux sous-réseaux d'antennes d'émission et de réception dont la direction de transmission peut être commandée et qui présentent des premier et second plans de polarisation différents les uns des autres

Le document US-A1-2009/102704 décrit quant à lui un radar à synthèse d'ouverture polarimétrique compact utilisant une antenne d'usage général à réseaux phasés pour des polarisations verticale et horizontale.

Cependant, cette cohabitation de différentes antennes au sein d'un même système pose des problèmes d'intégration. Notamment, cette intégration est rendue d'autant plus compliquée qu'il est souhaité que le système puisse également suivre une cible ce qui implique un traitement de l'information reçue issue de deux voies de réception distinctes.

L'invention a ainsi pour but de proposer un procédé de suivi d'une cible qui soit moins encombrant à mettre en oeuvre.

A cet effet, l'invention a pour objet un procédé de détermination d'au moins une composante de la direction d'une cible repérée par deux angles dans deux plans différents, un premier et un deuxième plans, par une antenne réseau pour l'émission d'ondes électromagnétiques selon la revendication 1.

Suivant des modes particuliers de réalisation, le procédé comporte l'une ou plusieurs des caractéristiques des revendications 2 à 7, prise(s) individuellement ou suivant toute(s) combinaison(s) techniquement possible(s).

Il est également proposé une antenne réseau pour l'émission d'ondes électromagnétiques selon la revendication 8.

Suivant des modes particuliers de réalisation, l'antenne comporte l'une ou plusieurs des caractéristiques suivantes, prise(s) individuellement ou suivant toute(s) combinaison(s) techniquement possible(s) :

- L'antenne comprend une entrée de collecte d'une énergie électromagnétique fournie par la source, pouvant être placée perpendiculairement à la surface d'émission, et des moyens de propagation centrifuge de ladite énergie électromagnétique depuis l'entrée de collecte vers la périphérie de la surface d'émission,

- les premières antennes élémentaires sont adaptées pour être déphasées les unes par rapport aux autres, de façon à émettre des premières ondes élémentaires d'additionnant de manière cohérente dans une première direction d'émission, et les deuxièmes antennes élémentaires sont adaptées pour être déphasées les unes par rapport aux autres, de façon à émettre des deuxièmes ondes élémentaires s'additionnant de manière cohérente dans une deuxième direction d'émission, différente de la première direction d'émission,

- les première et deuxième polarisations sont des polarisations circulaires de sens opposés,

- chaque antenne élémentaire comprend une partie d'émission constituée d'un fil métallique décrivant une forme d'hélice, ladite hélice tournant dans un premier sens pour chaque première antenne élémentaire, et dans un deuxième sens, opposé au premier sens, pour chaque deuxième antenne élémentaire,

- les premières antennes élémentaires sont adaptées pour que les premières ondes élémentaires s'additionnent de manière cohérente de façon à former une première onde cohérente dans une première direction d'émission, et les deuxièmes antennes élémentaires sont adaptées pour que les deuxièmes ondes élémentaires s'additionnent de manière cohérente de façon à former une deuxième onde cohérente dans une deuxième direction d'émission, identique à la première direction, les première et deuxième ondes cohérentes ayant sensiblement le même spectre fréquentiel et la même phase,

- les premières antennes élémentaires sont adaptées pour que les premières ondes élémentaires s'additionnent de manière cohérente de façon à former une première onde cohérente dans une première direction d'émission, et les deuxièmes antennes élémentaires sont adaptées pour que les deuxièmes ondes élémentaires s'additionnent de manière cohérente de façon à former une deuxième onde cohérente dans une deuxième direction d'émission, identique à la première direction, les première et deuxième ondes cohérentes ayant sensiblement le même spectre fréquentiel et étant déphasées l'une par rapport à l'autre,

- les première et deuxième ondes cohérentes sont en opposition de phase,

- les première et deuxième ondes cohérentes ont la même amplitude,

- les premières et deuxièmes antennes élémentaires sont équiréparties sur la surface d'émission,

- pour chaque antenne élémentaire portée par la surface d'émission, il peut exister une autre antenne élémentaire diagonalement opposée à ladite antenne élémentaire et à sensiblement la même distance du centre de la surface d'émission, l'une de ces antennes élémentaires étant une première antenne élémentaire, et l'autre antenne élémentaire étant une deuxième antenne élémentaire,

- pour chaque première, respectivement deuxième, antenne élémentaire portée par la surface d'émission, chaque antenne élémentaire adjacente à ladite première, respectivement deuxième, antenne élémentaire et à sensiblement la même distance du centre de la surface d'émission, est une deuxième antenne élémentaire, respectivement une première antenne élémentaire,

- les première et deuxième polarisations sont adaptées pour minimiser l'excitation des premières antennes élémentaires par les ondes élémentaires émises par les deuxièmes antennes élémentaires, et réciproquement.

L'invention a également pour objet une arme hyperfréquence selon la revendication 9.

D'autres caractéristiques et avantages de l'invention apparaîtront à la lecture de la description qui va suivre, donnée uniquement à titre d'exemple et faite en se référant aux dessins annexés, sur lesquels :

- la Figure 1 est une vue schématique de face d'une antenne,,

- la Figure 2 est une vue schématique en coupe de l'antenne de la Figure 1,

- la Figure 3 est une vue similaire à celle de la Figure 2, dans un premier mode d'utilisation de l'antenne,

- la Figure 4 est une vue similaire à celle de la Figure 2, dans un deuxième mode d'utilisation de l'antenne,

- la Figure 5 est une vue similaire à celle de la Figure 2, dans un troisième mode d'utilisation de l'antenne, et

- la Figure 6 est un ordinogramme d'un exemple de mise en oeuvre du procédé selon l'invention.

Il est proposé une antenne d'une arme hyperfréquence, telle qu'un brouilleur ou une arme micro-onde, propre à émettre, dans une direction déterminée, un champ électromagnétique de forte puissance, typiquement de puissance crête supérieure à 10 kW, destiné à perturber ou détruire tout dispositif comportant de l'électronique.

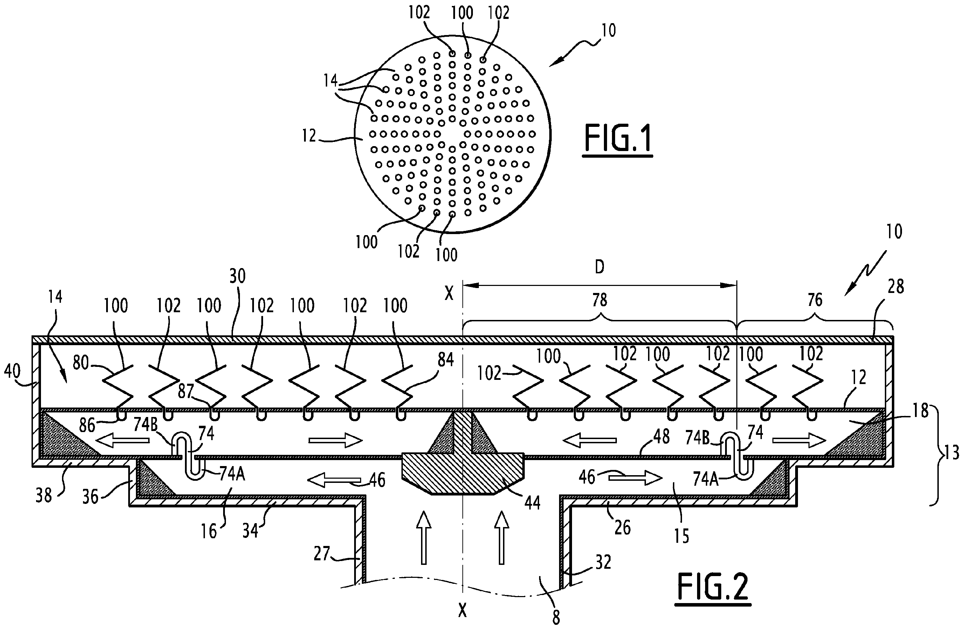

Cette arme hyperfréquence comporte généralement une source radiofréquence, constituée par exemple d'un magnétron ou d'un MILO, et une antenne reliée à la source par un moyen 8 (Figure 2) de guidage du flux ou de l'onde électromagnétique généré par la source.

L'antenne 10 comporte une surface d'émission 12 et un réseau d'antennes élémentaires 14 s'étendant chacune depuis la surface d'émission 12. Par exemple, les antennes élémentaires 14 sont réparties suivant des cercles concentriques sur la surface d'émission 12 de l'antenne.

Comme illustré sur la Figure 1, l'antenne peut être de révolution d'axe X-X autour d'un axe perpendiculaire à la surface d'émission 12. Par exemple, elle est circulaire. En variante, la surface d'émission est une demi-sphère ou toute autre surface tridimensionnelle, il suffit d'ajuster en conséquence la phase des antennes élémentaires.

Suivant encore une variante, l'antenne est carrée ou rectangulaire.

Plus généralement, l'antenne 10 a un plan de symétrie comportant un axe de symétrie X-X. Le plan de symétrie est perpendiculaire au plan de coupe illustré.

En outre, l'antenne 10 est une antenne à transmission radiale. A cet effet, en référence à la Figure 2, le moyen de guidage 8 est adapté pour amener l'onde électromagnétique générée par la source radiofréquence au droit du centre de la surface d'émission 12, et notamment suivant l'axe de symétrie X-X lorsqu'il existe. L'antenne 10 comprend également des moyens 13 de répartition de l'onde électromagnétique sur l'intégralité de la surface d'émission 12. Ces moyens de répartition 13 comprennent des moyens 15 de propagation centrifuge du flux électromagnétique depuis le moyen de guidage 8 vers la périphérie de la surface d'émission 12.

On notera que par « centre » de la surface d'émission 12, on comprend le centre de gravité de cette dernière.

Dans l'exemple représenté, les moyens de répartition 13 comprennent un premier 16 et un second 18 guides d'ondes superposés et adaptés pour propager le flux électromagnétique généré par la source, ainsi que l'énergie associée à ce flux.

Ces guides d'ondes 16, 18 sont constitués de deux couronnes coaxiales et contiguës.

Le premier guide d'ondes 16 est relié en son centre au moyen de guidage 8 connecté à la source radiofréquence. Le premier guide d'ondes 16 est adapté pour propager de manière centrifuge l'énergie électromagnétique transmise par le moyen de guidage 8 et destinée à alimenter le second guide d'ondes 18. Le premier guide d'ondes 16 constitue à ce titre un moyen de propagation centrifuge 15.

Le second guide d'ondes 18 quant à lui est adapté pour alimenter le réseau d'antennes élémentaires 14. La surface d'émission 12 forme une paroi latérale du second guide d'ondes 18.

L'ensemble formé par les deux guides d'onde 16, 18 est supporté par un châssis 26 en forme générale de cloche s'évasant progressivement depuis une entrée 27 de collecte du rayonnement magnétique émis par la source jusqu'à une bouche 28 de sortie du rayonnement issu des antennes élémentaires 14. Cette bouche 28 est obturée par une paroi de protection 30 étanche à l'air permettant de créer le vide à l'intérieur du châssis 26. Cette paroi 30 est transparente au rayonnement électromagnétique et forme radôme.

L'entrée de collecte 27 est formée d'un tube 32 prolongé par une couronne 34 formant le fond du châssis. Le tube 32 constitue une extrémité du moyen de guidage 8. La couronne 34 est d'axe X-X. Le fond est prolongé par une première paroi périphérique 36 présentant à son extrémité tournée vers la bouche 28 un épaulement divergeant 38. Cet épaulement 38 est bordé d'une seconde paroi périphérique 40 portant la paroi de protection 30.

Le second guide d'ondes 18 prend appui sur le support formé par l'épaulement divergent 38. De façon similaire, le premier guide d'ondes 16 prend appui sur le fond du châssis formé par la couronne 34.

Les moyens de propagation centrifuge 15 comprennent également, en regard du conduit 32 suivant l'axe X-X, un cône métallique 44 propre à modifier le mode de propagation du flux électromagnétique, en passant d'un flux d'axe X-X, par exemple suivant le mode transverse magnétique $TM_{01}$, à un flux centrifuge s'étendant depuis l'axe X-X vers l'extérieur suivant le sens des flèches 46, par exemple suivant le mode transverse électrique et magnétique TEM. A cet effet, le sommet du cône 44 est orienté vers le conduit 32. De façon connue, ce cône métallique 44 est appelé convertisseur de mode.

Le premier guide d'ondes 16 est adapté pour guider ce flux centrifuge 46 vers la périphérie de la surface d'émission 12.

Le premier et le second guides d'ondes 16, 18 ont une paroi métallique continue commune 48 s'étendant parallèlement à la surface d'émission 12 et disposée entre la surface d'émission 12 et le fond 34. Cette paroi commune 48 ou paroi intermédiaire délimite les deux guides d'onde.

La paroi intermédiaire 48 est munie d'un réseau de moyens de captation et de couplage de l'énergie électromagnétique entre le premier et le second guides d'onde. Ces moyens de captation et de couplage comportent par exemple des boucles traversantes 74 réparties régulièrement à une distance D de l'axe X-X.

Les boucles traversantes 74 sont de préférence réparties régulièrement suivant un cercle de rayon D et centré suivant l'axe X-X.

Ces boucles 74 sont formées d'un conducteur métallique et présentent deux lobes 74A, 74B faisant saillie de part et d'autre de la paroi intermédiaire 48.

Le réseau de boucles traversantes 74 partage la surface d'émission 12 en deux régions contiguës centrées suivant l'axe X-X. Chaque région comporte au moins une antenne élémentaire 14. Une région dite périphérique notée 76 comporte les antennes élémentaires 14 situées à une distance de l'axe X-X supérieure à la distance D tandis qu'une région dite interne notée 78 comporte les antennes élémentaires 14 situées à une distance de l'axe X-X inférieure ou égale à la distance D. De préférence, la région périphérique 76 comprend plus d'antennes élémentaires que la région interne.

La distance D est choisie en fonction de la puissance de la source radiofréquence pour être aussi petite que possible tout en évitant toutefois le phénomène de claquage au niveau des lobes 74A, 74B. En effet, la densité de puissance est d'autant plus faible que les boucles 74 sont éloignées du centre.

En variante, les moyens de répartition 13 comprennent un guide d'ondes cylindrique s'étendant perpendiculairement aux guides d'ondes 16, 18 et reliant les périphéries extérieures des guides d'ondes 16, 18 l'une à l'autre, ceux-ci ayant alors le même diamètre.

En variante encore, les moyens de répartition 13 comprennent les seuls premier guide d'ondes 16 et convertisseur de mode 44. En particulier, les moyens de répartition 13 ne comprennent pas le deuxième guide d'ondes 18. La surface d'émission 12 constitue alors une paroi latérale du premier guide d'ondes 16, et chaque antenne élémentaire 14 est adaptée pour capter le flux électromagnétique dans le premier guide d'ondes 16.

Chaque antenne élémentaire 14 comporte un brin d'émission 80, adapté pour émettre une onde électromagnétique vers l'extérieur de l'antenne lorsqu'il est excité par un courant électrique, et une boucle de captation 86, adaptée pour être excitée par le flux électromagnétique fourni par la source, et pour générer un courant électrique dans le brin d'émission 80 sous l'effet de cette excitation.

Le brin 80 est disposé du côté de la bouche d'émission 28 de l'antenne 10. Il présente une partie d'émission 84 constituée d'un fil métallique décrivant une forme d'hélice. De façon connue, le diamètre de l'hélice, le nombre de spires de l'hélice, l'espacement entre ces spires, et le diamètre du brin d'émission 80 sont déterminés en fonction de la bande de fréquences dans laquelle on souhaite que l'antenne élémentaire 14 puisse émettre. La partie d'émission 84 est reliée électriquement à la boucle de captation 86.

La boucle 86 est disposée entre la surface d'émission 12 et la paroi commune 48, dans le second guide d'ondes 18. Elle est liée rigidement et de manière fixe à la paroi formant la surface d'émission 12. De façon connue, sa surface est déterminée en fonction de la puissance que l'on souhaite collecter, et la forme de la boucle 86 (son « aspect ratio » en anglais) est déterminée en fonction de la bande de fréquences que l'on souhaite collecter. La boucle 86 est obtenue par courbure sur lui-même d'un conducteur métallique.

La surface d'émission 12 est percée d'un orifice traversant 87 pour permettre la liaison de la partie d'émission 84 avec la boucle 86. Le conducteur métallique de la boucle 86 s'étend partiellement au travers de l'orifice 87. De façon connue, le rapport entre le diamètre du conducteur métallique constituant la boucle 86 et le diamètre de l'orifice 87 est déterminé en fonction de la bande de fréquences que l'on souhaite pouvoir être transmises entre la boucle 86 et la partie d'émission 84.

On notera que, pour des raisons de simplification, les antennes élémentaires 14 ont été représentées comme étant alignées sur des diamètres de la surface d'émission 12, mais qu'une telle disposition des antennes élémentaires 14 est en réalité à éviter, car elle créerait des lobes de réseau.

Les antennes élémentaires 14 comprennent des premières antennes élémentaires 100 et des deuxièmes antennes élémentaires 102. Ces premières 100 et deuxièmes 102 antennes élémentaires sont découplées électromagnétiquement les unes des autres.

Ce découplage électromagnétique des premières et deuxièmes antennes élémentaires 100, 102 est obtenu par une polarisation différente des ondes électromagnétiques élémentaires émises par les premières et deuxièmes antennes élémentaires 100, 102. En particulier, chaque première antenne élémentaire 100 est adaptée pour émettre une première onde élémentaire, ayant une première polarisation, identique à la polarisation de la première onde élémentaire émise par chaque autre première antenne élémentaire 100, et chaque deuxième antenne élémentaire 102 est adaptée pour émettre une deuxième onde élémentaire, ayant une deuxième polarisation, différente de la première polarisation, et identique à la polarisation de la deuxièmes onde élémentaire émise par chaque autre deuxième antenne élémentaire 102.

Les première et deuxième polarisations sont choisies de façon à minimiser l'excitation des premières antennes élémentaires 100 par les ondes élémentaires émises par les deuxièmes antennes élémentaires 102, et réciproquement. De préférence, les première et deuxième polarisations sont des polarisations circulaires, l'une étant une polarisation circulaire droite et l'autre étant une polarisation circulaire gauche.

Dans l'exemple représenté, les première et deuxième polarisations sont des polarisations circulaires. La différence d'orientation de ces polarisations est obtenue par un sens de rotation différent de l'hélice décrite par le fil métallique constituant la partie d'émission 84 pour les premières antennes élémentaires 100 d'une part, et pour les deuxièmes antennes élémentaires 102 d'autre part. En d'autres termes, l'hélice décrite par le fil métallique constituant la partie d'émission 84 tourne dans un premier sens pour chaque première antenne élémentaire 100, et dans un deuxième sens, opposé au premier sens, pour chaque deuxième antenne élémentaire 102.

Les premières antennes élémentaires 100 sont adaptées pour que les premières ondes électromagnétiques élémentaires s'additionnent de manière cohérente de manière à former une première onde cohérente dans une première direction d'émission, et les deuxièmes antennes élémentaires 102 sont adaptées pour que les deuxièmes ondes électromagnétiques élémentaires s'additionnent de manière cohérente de manière à former une deuxième onde cohérente dans une deuxième direction d'émission. Les première et deuxième ondes cohérentes ont des polarisations différentes.

Avantageusement, les premières et deuxièmes antennes élémentaires 100, 102 sont adaptées pour que les première et deuxième ondes cohérentes aient la même amplitude. Cela est obtenu en jouant sur le nombre de premières et deuxièmes antennes élémentaires 100, 102 sur la surface d'émission 12, la surface de la boucle de captation 86 de chaque antenne élémentaire 14, et le diamètre de l'hélice de chaque antenne élémentaire 14.

De préférence, les premières antennes élémentaires 100 sont adaptées pour être déphasées les unes par rapport aux autres, de façon à ce que la première direction d'émission soit décalée angulairement par rapport à la normale à la surface d'émission 12. De préférence, les deuxièmes antennes élémentaires 102 sont également adaptées pour être déphasées les unes par rapport aux autres, de façon à ce que la deuxième direction d'émission soit décalée angulairement par rapport à la normale à la surface d'émission 12.

De façon connue, des antennes élémentaires 14 ayant des angles de départ de l'hélice différents dans un référentiel lié à la surface d'émission 12 sont déphasées les unes par rapport aux autres. Avantageusement, l'antenne 10 comprend donc des moyens (non représentés) d'entraînement en rotation du brin d'émission 80 de chaque antenne élémentaire 14, pour modifier les angles de départ des hélices de certaines antennes élémentaires 14, de façon à induire des déphasages entre les antennes élémentaires 14. Pour un exemple de mise en oeuvre de tels moyens d'entraînement, le lecteur se reportera à la demande de brevet FR 10 05125.

En particulier, les moyens d'entraînement sont adaptés pour orienter les premières et deuxièmes antennes élémentaires 100, 102 de façon à ce que les première et deuxième directions d'émission soient sélectivement identiques ou distinctes l'une de l'autre. Les moyens d'entraînement sont également adaptés pour orienter les premières et deuxièmes antennes élémentaires 100, 102 de façon à ce que les première et deuxième ondes soient sélectivement en phase ou en opposition de phase l'une avec l'autre.

Avantageusement, les premières et deuxièmes antennes élémentaires 100, 102 sont adaptées pour émettre dans une même bande de fréquences.

Les premières et deuxièmes antennes élémentaires 100, 102 sont équiréparties sur la surface d'émission 12. En d'autres termes, les premières et deuxièmes antennes élémentaires 100, 102 sont réparties sur la surface d'émission 12 de façon à ce que dans chaque région de la surface d'émission 12, les premières antennes élémentaires 100 soient mélangées aux deuxièmes antennes élémentaires 102, et réciproquement.

En particulier, pour chaque antenne élémentaire 14 portée par la surface 12, il existe une autre antenne élémentaire 14 diagonalement opposée à ladite antenne élémentaire 14 et à sensiblement la même distance du centre de la surface 12, l'une de ces antennes élémentaires 14 étant une première antenne élémentaire 100, et l'autre antenne élémentaire 14 étant une deuxième antenne élémentaire 102. En outre, pour chaque première 100, respectivement deuxième 102, antenne élémentaire portée par la surface 12, chaque antenne élémentaire 14 adjacente à ladite première 100, respectivement deuxième 102, antenne élémentaire et à sensiblement la même distance du centre de la surface 12, est une deuxième antenne élémentaire 102, respectivement une première antenne élémentaire 100.

On notera que par « à sensiblement la même distance », on comprend que la différence entre les distances est inférieure à 5% de la plus grande des distances.

En variante (non représentée), la surface d'émission 12 est divisée en au moins trois régions concentriques. Les antennes élémentaires 14 localisée dans chaque région sont exclusivement des premières 100 ou des deuxièmes 102 antennes élémentaires. En outre, pour toute région dans laquelle sont localisées des premières antennes élémentaires 100, les antennes élémentaires 14 des régions adjacentes sont exclusivement des deuxièmes antennes élémentaires 102, et réciproquement.

Le fonctionnement de l'antenne 10 va maintenant être détaillé.

En fonctionnement, le flux électromagnétique arrivant suivant l'axe X-X par l'entrée 27 est réparti sur le premier guide d'ondes 16 par le convertisseur de mode 44. La direction de propagation du flux est représentée par les flèches 46 sur la figure 2.

Le flux alors centrifuge se trouve capté par les lobes 74A des boucles et réémis par les lobes 74B dans l'espace entre le surface d'émission 12 et la paroi commune 48. Le flux est alors partagé en deux flux : un flux centrifuge et un flux centripète pour alimenter les antennes élémentaires 14 respectivement de la région périphérique 76 et de la région interne 78 de la surface d'émission 12. Les boucles 86 des antennes élémentaires 14 captent le flux électromagnétique, en particulier le champ magnétique, induisant un courant jusqu'à la partie d'émission 84, laquelle émet une onde électromagnétique élémentaire avec une phase déterminée par le positionnement angulaire de l'antenne élémentaire 14. La partie d'émission 84 étant hélicoïdale, l'onde électromagnétique élémentaire a une polarisation circulaire.

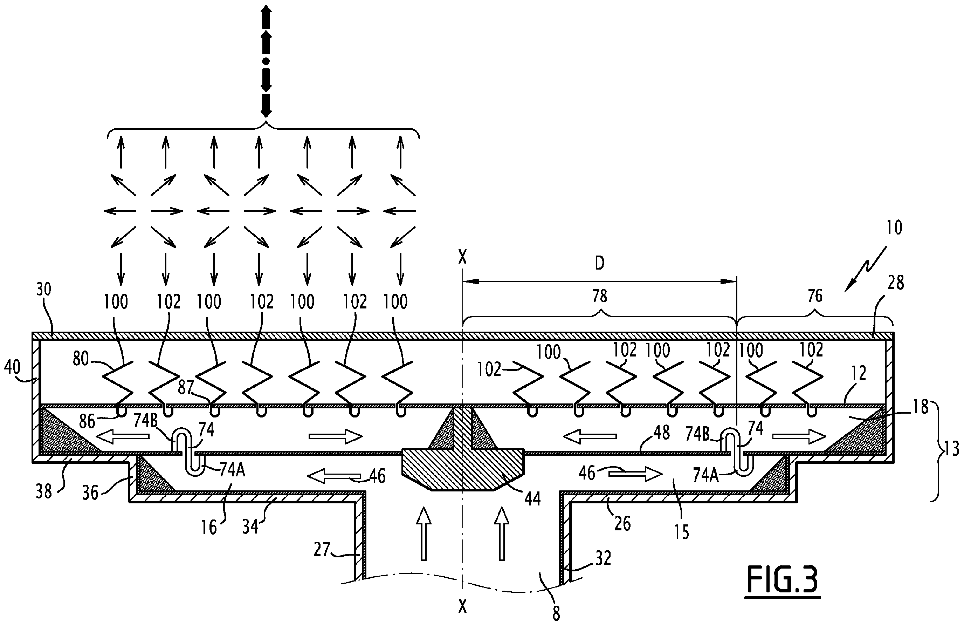

En référence à la Figure 3, dans un premier mode d'utilisation de l'antenne 10, les premières et deuxièmes antennes élémentaires 100, 102 sont adaptées pour que les première et deuxième directions d'émission soient identiques, les première et deuxième ondes cohérentes étant en phase l'une avec l'autre.

Les premières ondes électromagnétiques élémentaires s'additionnent alors pour former la première onde cohérente, et les deuxièmes ondes électromagnétiques élémentaires s'additionnent pour former la deuxième onde cohérente. Les premières et deuxièmes antennes élémentaires 100, 102 étant adaptées pour émettre dans la même bande de fréquences, les ondes cohérentes ont le même spectre fréquentiel. En outre, les hélices des premières et deuxièmes antennes élémentaires 100, 102 ayant des sens de rotation opposés, les ondes cohérentes ont des polarisations circulaires de sens opposés. Enfin, ces ondes cohérentes se propageant dans des directions d'émission identiques, ayant des amplitudes égales, et étant en phase l'une avec l'autre, elles interagissent constructivement en champ lointain pour former une onde à polarisation rectiligne verticale, comme visible sur la Figure 3.

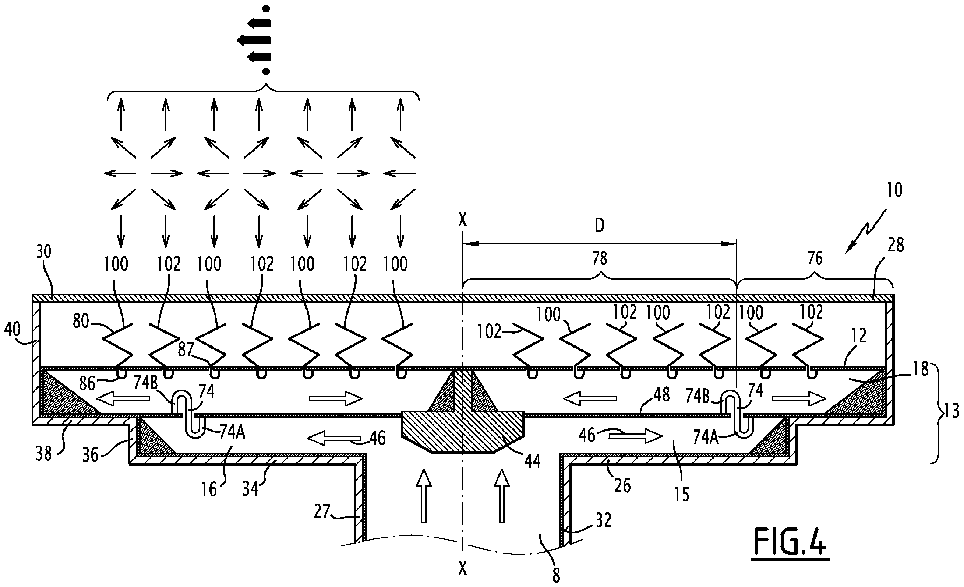

En référence à la Figure 4, dans un deuxième mode d'utilisation de l'antenne 10, les premières et deuxièmes antennes élémentaires 100, 102 sont adaptées pour que les première et deuxième directions d'émission soient identiques, les première et deuxième ondes cohérentes étant déphasées d'un angle θ l'une avec l'autre.

Ce deuxième mode d'utilisation est par exemple obtenu après rotation des deuxièmes antennes élémentaires 102 par rapport à la surface d'émission 12, de façon à induire un déphasage entre les première et deuxième antennes élémentaires 100, 102.

Les premières ondes électromagnétiques élémentaires s'additionnent alors pour former la première onde cohérente, et les deuxièmes ondes électromagnétiques élémentaires s'additionnent pour former la deuxième onde cohérente. Les premières et deuxièmes antennes élémentaires 100, 102 étant adaptées pour émettre dans la même bande de fréquences, les ondes cohérentes ont le même spectre fréquentiel. En outre, les hélices des premières et deuxièmes antennes élémentaires 100, 102 ayant des sens de rotation opposés, les ondes cohérentes ont des polarisations circulaires de sens opposés. Enfin, ces ondes cohérentes se propageant dans des directions d'émission identiques, ayant des amplitudes égales, et étant déphasées l'une avec l'autre, elles interagissent constructivement en champ lointain pour former une onde à polarisation rectiligne formant un angle θ/2 avec la verticale.

De préférence, comme dans l'exemple représenté sur la Figure 4, l'angle de déphasage θ est égal à 180°. En d'autres termes, les première et deuxième ondes cohérentes sont en opposition de phase l'une avec l'autre. L'onde formée par l'interaction des première et deuxième ondes cohérentes a alors une polarisation rectiligne horizontale, comme visible sur la Figure 4.

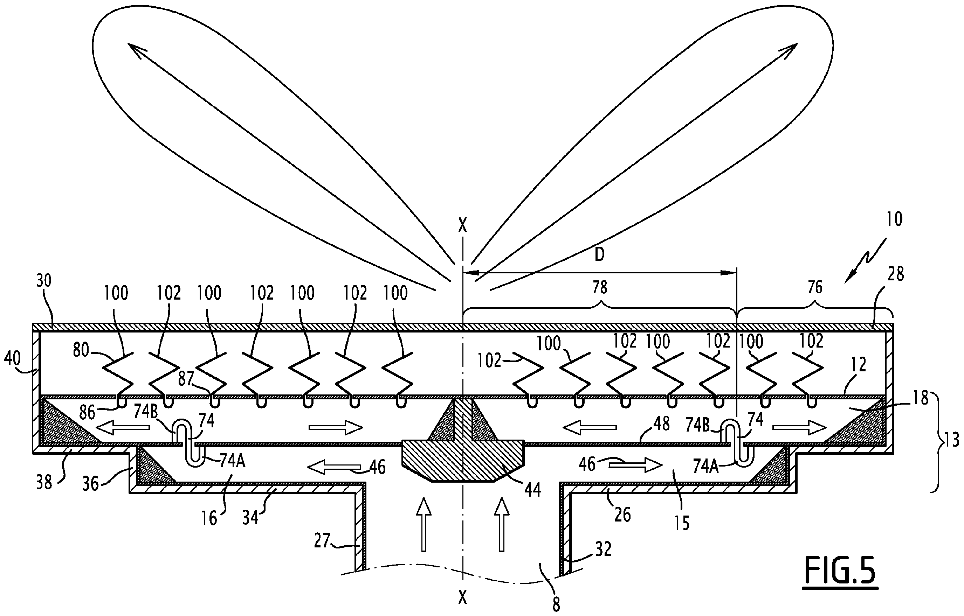

En référence à la Figure 5, dans un troisième mode d'utilisation de l'antenne 10, les premières et deuxièmes antennes élémentaires 100, 102 sont adaptées pour que les première et deuxième directions d'émission soient distinctes.

Ce troisième mode d'utilisation est par exemple obtenu après rotation d'une partie des premières antennes élémentaires 100 et d'une partie des deuxièmes antennes élémentaires 102 par rapport à la surface d'émission 12, de façon à induire un déphasage entre les première antennes élémentaires 100 entre elles, et entre les deuxièmes antennes élémentaires 102 entre elles.

Les premières ondes électromagnétiques élémentaires s'additionnent alors pour former la première onde cohérente, et les deuxièmes ondes électromagnétiques élémentaires s'additionnent pour former la deuxième onde cohérente. Les première et deuxième directions d'émission étant distinctes, les première et deuxième ondes cohérentes se propagent dans des directions différentes. Il est ainsi possible d'atteindre deux cibles distinctes au moyen de l'antenne 10, en concentrant l'énergie électromagnétique émise sur chacune des deux cibles.

L'antenne 10 offre une grande flexibilité d'utilisation.

Tout d'abord, la différence de polarisation des ondes élémentaires émises par les premières et deuxièmes antennes élémentaires 100, 102 permet de minimiser l'excitation des premières antennes élémentaires 100 par les ondes émises par les deuxièmes antennes élémentaires 102, et réciproquement. Cela permet par conséquent d'orienter chaque onde cohérente indépendamment de l'autre onde cohérente, sans risque de parasitage de l'une par l'autre.

En outre, il est possible d'orienter délibérément les premières et deuxièmes antennes élémentaires 100, 102 pour émettre les ondes cohérentes dans une même direction, de façon à obtenir des formes d'onde originales.

De plus, le recours à des antennes élémentaires 14 à hélice permet d'avoir une grande directivité des ondes émises, et permet d'émettre sur une large bande de fréquences.

Enfin, l'antenne étant du type à transmission radiale, elle est adaptée pour émettre des ondes de forte de puissance.

Selon le mode de réalisation, l'antenne 10 est, en outre, munie d'un contrôleur adapté à mettre en oeuvre un procédé de détermination de la position d'une cible.

Déterminer la position de la cible dans le domaine des ondes consiste généralement à déterminer la direction de la droite reliant l'antenne 10 à la cible. Une telle direction est repérée par la donnée de deux angles dans deux plans différents. De manière usuelle, les plans sont perpendiculaires l'un à l'autre et les angles sont appelés le gisement et le site. Pour la suite de la description, ces deux angles seront notés respectivement α et β.

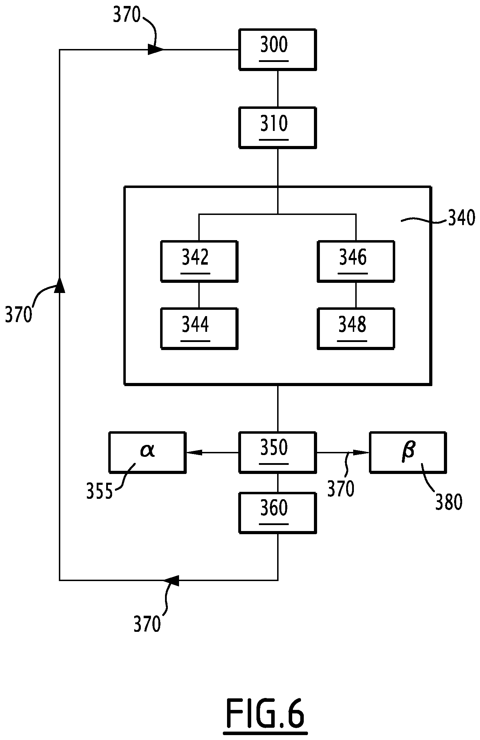

Selon l'exemple donné par la figure 6, le procédé de détermination de la position d'une cible comporte une étape 300 d'émission. A cette étape 300, l'antenne 10 émet simultanément vers la cible une première onde et une deuxième onde électromagnétiques notées respectivement E1 et E2. Les deux ondes E1 et E2 présentent une polarisation différente.

Leurs directions d'émission sont également différentes. Dans le cas particulier de la figure 6, elles sont symétriques par rapport à l'axe X-X. Elles sont décalées d'un angle Φ en gisement. Cela signifie que l'angle formé par les deux directions d'émission est égal à 2Φ. Autrement dit, si la direction de visée de la cible est pris comme référence, l'onde E1 est en avance de phase de +Φ tandis que l'onde E2 présente un retard de phase de - Φ.

En outre, dans le cas de la mise en oeuvre de la figure 6, les deux ondes E1 et E2 présentent un déphasage de 90°. Cela implique que l'onde E1 est en avance de phase de +Φ tandis que l'onde E2 présente un retard de phase de -Φ+90°.

En variante, à cette étape 300, l'antenne 10 émet plus de deux ondes électromagnétiques, notamment quatre.

Le procédé comporte également une étape 310 de réception par l'antenne 10 d'un signal S. La réception se fait au niveau des antennes élémentaires 14. Ce signal S correspond à la réflexion des deux ondes électromagnétiques E1 et E2 sur la cible. Ainsi, le signal S comprend une première composante C1 issue de la première onde E1 et une deuxième composante C2 issue de la deuxième onde E2.

Dans le cas où les deux ondes E1 et E2 présentent un déphasage de 90°, le signal S s'exprime comme :

S = A1.sin (ωt+Φ) + A2.cos (ωt+Φ) Où A1 et A2 sont deux amplitudes et ω est la pulsation.

La première composante C1 correspond au signal A1.sin (ωt+Φ) tandis que la deuxième composante correspond au signal A2.cos (ωt+Φ).

Le procédé comporte aussi une étape 340 de détermination des valeurs de l'amplitude de chacun des composantes C1, C2 par traitement électronique du signal reçu.

Dans le cas présenté, les valeurs d'amplitude sont les valeurs A1 et A2.

Selon l'exemple de la figure 6, l'étape 340 comprend plusieurs étapes 342, 344, 346 et 348.

A l'étape 342, le signal S reçu est mélangé dans un mélangeur avec un signal de la forme générale c.sin (ωt+Φ) où c est une constante connue. Ce signal est un signal sinusoïdale ayant la même fréquence et le même déphasage que le signal source excitant les antennes élémentaires 14 de l'antenne 10. Du fait de l'orthogonalité des déphasages des ondes E1 et E2, il est obtenu, en sortie du mélangeur, un signal dont la composante continue est proportionnelle à la valeur de A1.

A l'étape 344, le signal obtenu à l'issue du mélange de l'étape 342 est filtré par un filtre passe-bas. La fréquence de coupure de ce filtre passe-bas est choisie pour extraire, la composante continue. La valeur de A1 en est déduite.

A l'étape 346, le signal S reçu est mélangé dans un mélangeur avec un signal de la forme générale d*cos (ωt+Φ) où d est une constante connue. Ce signal correspond au signal émis par la source. Du fait de l'orthogonalité des déphasages, il est obtenu, en sortie du mélangeur, un signal dont la composante continue est proportionnelle à la valeur de A2.

A l'étape 348, le signal obtenu à l'issue du mélange de l'étape 346 est filtré par un filtre passe-bas. En ajustant la fréquence de coupure de ce filtre passe-bas, la composante continue est extraite. La valeur de A2 en est déduite.

De manière avantageuse, les étapes 342 et 344 d'une part, 346 et 348 d'autre part, sont réalisées en parallèle pour accélérer le temps de traitement du signal S.

Le procédé comporte aussi une étape 350 de calcul de la position de la cible à partir des valeurs A1 et A2. Dans le mode de réalisation présenté, l'angle α est proportionnel au rapport entre la différence des valeurs des amplitudes A1 et A2 des composantes C1, C2 sur la somme des valeurs des amplitudes A1 et A2 des composantes C1, C2. Ceci s'écrit :

$$\alpha \propto \frac{A1 - A2}{A1 + A2}$$

Où le signe « ∝ » signifie proportionnel.

L'angle de gisement α est ainsi déterminé à l'issue de l'étape 350 ainsi que l'indique schématiquement le cadre 355.

Pour repérer la cible, il convient de déterminer également la valeur de l'angle de site β.

Ainsi, le procédé présente également une étape 360 de rotation de l'émission de l'antenne 10 dans un plan perpendiculaire au plan dans lequel l'étape 300 a été réalisée.

Selon un mode de réalisation, l'étape 360 est mise en oeuvre par une rotation mécanique de l'antenne 10.

Selon un autre mode de réalisation, l'étape 360 est mise en oeuvre par modification des déphasages des premières antennes élémentaires 100 et des deuxièmes antennes élémentaires 102. La modification des déphasages se fait par rotation de l'antenne élémentaire sur elle-même.

Selon les cas, la rotation d'une antenne élémentaire 102, 104 se fait de manière plus ou moins indépendante des autres antennes élémentaires 102, 104.

Dans un premier cas, chaque antenne élémentaire 100, 102 est munie d'un moteur adapté pour faire tourner chaque antenne élémentaire 100, 102. La rotation de chaque antenne élémentaire 102, 104 est alors contrôlée de manière totalement indépendante.

Dans un deuxième cas, des moyens d'entraînement en rotation tels que présentés précédemment permettent d'induire des déphasages entre les antennes élémentaires 102, 104. A titre d'illustration, les moyens d'entraînement en rotation sont adaptés pour faire tourner simultanément toutes les premières et deuxièmes antennes élémentaires 102, 104 placées à un même rayon du centre de la surface d'émission 12.

Les étapes 300, 310, 340 et 350 sont alors répétées pour obtenir la valeur de l'angle de site β pour la cible. Cette répétition est symbolisée par les flèches 370.

L'angle de site β est ainsi déterminé par le même calcul que l'angle α à l'issue de la deuxième occurrence de l'étape S350 ainsi que l'indique schématiquement le cadre 380.

A l'issue de la mise en oeuvre du procédé, la position angulaire de la cible est ainsi connue.

Dans certains modes de réalisations, le procédé comporte aussi une étape de visée de la cible dans la direction déterminée suivie d'une étape de tir avec une onde électromagnétique de forte puissance.

Le procédé proposé permet donc de déterminer la position d'une cible avec une seule voie de réception. La mesure est précise et se fait sur une seule impulsion. La mesure est réalisable pour des angles plus petits que l'ouverture du faisceau d'antenne 10, ces angles définissant un écart entre la direction d'une cible détectée et la direction pointée par l'antenne 10.

Le procédé est mis en oeuvre dans l'antenne 10 sans ajout de matériel. Une reprogrammation du calculateur inclus dans l'antenne 10 suffit. L'antenne 10 proposée est donc une antenne multifonction qui intègre la fonction « radar mono-pulse ». L'antenne 10 fait donc partie d'une arme micro-onde à conduite de tir intégrée.

L'emploi de ce procédé permet que l'antenne 10 soit pointée en direction de la cible avec une précision extrême tout en conservant son grand gain facilitant la destruction des cibles. L'antenne 10 est pointée à une fréquence de résonance de la cible, ce qui permet un meilleur couplage entre la cible et le rayonnement envoyé. En outre, le procédé évite les pertes de temps entre la désignation de la cible et le tir.

Un tel procédé s'applique non seulement aux antennes 10 qui comportent une seule voie de détection mais également aux antennes d'écartométrie pour radar monopulse possédant plusieurs voies de détection. Dans ce dernier cas, le procédé permet de n'utiliser qu'une seule voie de détection, l'autre voie étant laissée libre.

**Revendications**

1. Procédé de détermination d'au moins une composante de la direction d'une cible repérée par deux angles (α, β) dans deux plans différents, un premier et un deuxième plans, par une antenne réseau (10) pour l'émission d'ondes électromagnétiques, le procédé comportant les étapes de :

   - émission (300) par l'antenne réseau (10) vers la cible d'une première et d'une deuxième ondes électromagnétiques (E1, E2) ayant une polarisation différente et deux directions d'émission différentes, dans le premier plan,
   - réception (310) par l'antenne réseau (10) d'un signal (S) correspondant à la réflexion des deux ondes électromagnétiques (E1, E2) sur la cible, ce signal (S) comprenant une première composante (C1) issue de la première onde (E1) et une deuxième composante (C2) issue de la deuxième onde (E2),
   - détermination (340) des valeurs de l'amplitude (A1, A2) de chacune des composantes (C1, C2) par traitement électronique du signal (S) reçu, et

   - calcul (350) de la valeur de l'angle (α) du premier plan à partir des valeurs de l'amplitude (A1, A2) de chacune des composantes (C1, C2), **caractérisé en ce que** la première et la deuxième ondes électromagnétiques (E1, E2) sont émises simultanément, et **en ce que** l'antenne comprend un châssis (26), une pluralité d'antennes élémentaires (14) alimentées par une même source, et une surface d'émission (12) portant les antennes élémentaires (14), les antennes élémentaires (14) comprenant des premières (100) et des deuxièmes (102) antennes élémentaires, chaque première antenne élémentaire (100) étant adaptée pour émettre une première onde élémentaire, ayant une première polarisation, et chaque deuxième antenne élémentaire (102) étant adaptée pour émettre une deuxième onde élémentaire, ayant une deuxième polarisation, différente de la première polarisation, et une direction différente.

2. Procédé selon la revendication 1, dans lequel les première et deuxième ondes électromagnétiques (E1, E2) ont une phase décalée de 90° l'une par rapport à l'autre.

3. Procédé selon la revendication 1 ou 2, dans lequel l'étape de détermination (340) comprend le mélange du signal reçu avec un signal électronique correspondant à l'une des deux ondes émises (E1, E2) et un filtrage du signal mélangé.

4. Procédé selon l'une quelconque des revendications 1 à 3, le procédé comportant en outre une étape d'émission (300) simultanée par l'antenne réseau (10) vers la cible d'une première et d'une deuxième ondes électromagnétiques (E1, E2) ayant une polarisation différente et deux directions d'émission différentes dans le deuxième plan.

5. Procédé selon la revendication 4, dans lequel le procédé comporte une étape (360) de rotation mécanique de l'antenne (10) et une étape d'émission (300) dans le deuxième plan.

6. Procédé selon la revendication 4, dans lequel l'antenne (10) comporte une pluralité d'antennes élémentaires (14) et le procédé comporte une étape (360) de modification des déphasages des antennes élémentaires (14) et une étape d'émission (300) dans le deuxième plan.

7. Procédé selon l'une des revendications 4 à 6, dans lequel le procédé comporte les étapes de :

   - réception (310) par l'antenne réseau (10) d'un signal (S) correspondant à la réflexion des deux ondes électromagnétiques (E1, E2) sur la cible, ce signal (S) comprenant une première composante (C1) issue de la première onde (E1) et une deuxième composante (C2) issue de la deuxième onde (E2),

- détermination (340) des valeurs de l'amplitude (A1, A2) de chacune des composantes (C1, C2) par traitement électronique du signal (S) reçu,

- calcul (350) de la valeur de l'angle (β) du deuxième plan à partir des valeurs de l'amplitude (A1, A2) de chacune des composantes (C1, C2).

8. Antenne réseau (10) pour l'émission d'ondes électromagnétiques, comprenant un châssis (26), une pluralité d'antennes élémentaires (14) alimentées par une même source, et une surface d'émission (12) portant les antennes élémentaires (14), les antennes élémentaires (14) comprenant des premières (100) et des deuxièmes (102) antennes élémentaires, chaque première antenne élémentaire (100) étant adaptée pour émettre une première onde élémentaire, ayant une première polarisation, et chaque deuxième antenne élémentaire (102) étant adaptée pour émettre une deuxième onde élémentaire, ayant une deuxième polarisation, différente de la première polarisation, **caractérisée en ce que** chaque deuxième antenne élémentaire (102) est adaptée pour émettre une deuxième onde élémentaire ayant une direction différente, et **en ce que** l'antenne (10) comporte un calculateur adapté à mettre en oeuvre le procédé selon l'une quelconque des revendications 1 à 7.

9. Arme hyperfréquence comprenant une antenne réseau (10) selon la revendication 8.


**Patentansprüche**

1. Verfahren zum Ermitteln mindestens einer Komponente der Richtung eines Ziels, das mittels zweier Winkel (α, β) in zwei verschiedenen Ebenen, einer ersten Ebene und einer zweiten Ebene, gekennzeichnet ist, mittels einer Netzwerkantenne (10) zur Emission elektromagnetischer Wellen, das Verfahren die Schritte aufweisend:

- Emittieren (300) einer ersten elektromagnetischen Welle (E1) und einer zweiten elektromagnetischen Welle (E2), die eine unterschiedliche Polarisation und zwei unterschiedliche Emissionsrichtungen aufweisen, in der ersten Ebene in Richtung des Ziels mittels der Netzwerkantenne (10),

- Empfangen (310) eines Signals (S), das der Reflexion der zwei elektromagnetischen Wellen (E1, E2) an dem Ziel entspricht, mittels der Netzwerkantenne (10), wobei das Signal (S) eine erste Komponente (C1), die aus der ersten Welle (E1) resultiert, und eine zweite Komponente (C2), die aus der zweiten Welle (E2) resultiert, aufweist,

Ermitteln (340) der Amplitudenwerte (A1, A2) jeder der Komponenten (C1, C2) mittels elektronischer Verarbeitung des empfangenen Signals (S), und Berechnen (350) des Wertes des Winkels (α) der ersten Ebene, ausgehend von den Amplitudenwerten (A1, A2) jeder der Komponenten (C1, C2), **dadurch gekennzeichnet, dass** die erste elektromagnetische Welle (E1) und die zweite elektromagnetische Welle (E2) gleichzeitig emittiert werden und dass die Antenne ein Gehäuse (26), eine Mehrzahl von Elementarantennen (14), die mittels einer selben Quelle gespeist werden, und eine Emissionsoberfläche (12), die die Elementarantennen (14) trägt, aufweist, wobei die Elementarantennen (14) erste Elementarantennen (100) und zweite Elementarantennen (102) aufweist, wobei jede erste Elementarantenne (100) zum Emittieren einer ersten Elementarwelle, die eine erste Polarisation aufweist, eingerichtet ist und jede zweite Elementarantenne (102) zum Emittieren einer zweiten Elementarwelle, die eine zweite Polarisation, die von der ersten Polarisation verschieden ist, und eine unterschiedliche Richtung aufweist, eingerichtet ist.

2. Verfahren gemäß Anspruch 1, wobei die erste elektromagnetische Welle (E1) und die zweite elektromagnetische Welle (E2) eine um 90° zueinander versetzte Phase aufweisen.

3. Verfahren gemäß Anspruch 1 oder 2, wobei der Ermittlungsschritt (340) das Mischen des empfangenen Signals mit einem elektronischen Signal, das einer der beiden emittierten Wellen (E1, E2) entspricht, und ein Filtern des gemischten Signals aufweist.

4. Verfahren gemäß einem der Ansprüche 1 bis 3, wobei das Verfahren ferner einen Schritt des gleichzeitigen Emittierens (300) einer ersten elektromagnetischen Welle (E1) und einer zweiten elektromagnetischen Welle (E2), die eine unterschiedliche Polarisation und zwei verschiedenen Emissionsrichtungen in der zweiten Ebene aufweisen, zum Ziel mittels der Netzwerkantenne (10) aufweist.

5. Verfahren gemäß Anspruch 4, wobei das Verfahren einen Schritt (360) des mechanischen Drehens der Antenne (10) und einen Emissionsschritt (300) in der zweiten Ebene aufweist.

6. Verfahren gemäß Anspruch 4, wobei die Antenne (10) eine Mehrzahl von Elementarantennen (14) aufweist und das Verfahren einen Schritt (360) des Modifizierens der Phasenverschiebungen der Elementarantennen (14) und einen Emissionsschritt (300) in der zweiten Ebene aufweist.

7. Verfahren gemäß einem der Ansprüche 4 bis 6, wobei das Verfahren die Schritte aufweist:

   - Empfangen (310) eines Signals (S), das der Reflexion der zwei elektromagnetischen Wellen (E1, E2) an dem Ziel entspricht, mittels der Netzwerkantenne (10), wobei das Signal (S) eine erste Komponente (C1), die aus der ersten Welle (E1) resultiert, und eine zweite Komponente (C2), die aus der zweiten Welle (E2) resultiert, aufweist,
   - Ermitteln (340) der Amplitudenwerte (A1, A2) jeder der Komponenten (C1, C2) mittels elektronischer Verarbeitung des empfangenen Signals (S),
   - Berechnen (350) des Wertes des Winkels (β) der zweiten Ebene, ausgehend von den Amplitudenwerten (A1, A2) jeder der Komponenten (C1, C2).

8. Netzwerkantenne (10) für das Emittieren elektromagnetischer Wellen, aufweisend ein Gehäuse(26), eine Mehrzahl von Elementarantennen (14), die mittels einer selben Quelle gespeist werden, und eine Emissionsoberfläche (12), die die Elementarantennen (14) trägt, wobei die Elementarantennen (14) erste Elementarantennen (100) und zweite Elementarantennen (102) aufweisen, wobei jede erste Elementarantenne (100) zum Emittieren einer ersten Elementarwelle, die eine erste Polarisation aufweist, eingerichtet ist und jede zweite Elementarantenne (102) zum Emittieren einer zweiten Elementarwelle, die eine zweite Polarisation, die von der ersten Polarisation verschieden ist, eingerichtet ist, **dadurch gekennzeichnet, dass** jede zweite Elementarantenne (102) zum Emittieren einer zweiten Elementarwelle, die eine unterschiedliche Richtung aufweist, eingerichtet ist und dass die Antenne (10) einen Computer aufweist, der zum Ausführen des Verfahrens gemäß einem der Ansprüche 1 bis 7 eingerichtet ist.

9. Mikrowellenwaffe, die eine Netzwerkantenne (10) gemäß Anspruch 8 aufweist.

## Claims

1. Method for determining at least one component of the direction of a target determined by two angles (α, β) in two different planes, a first plane and a second plane, by an antenna array (10) for the transmission of electromagnetic waves, the method comprising steps of:

   - transmission (300) by the antenna array (10), towards the target, of first and second electromagnetic waves (E1, E2) having a different polarisation and two different transmission directions, in the first plane,
   - reception (310) by the antenna array (10) of a signal (S) corresponding to the reflection of the two electromagnetic waves (E1, E2) at the target, the signal (S) comprising a first component (C1) derived from the first wave (E1) and a second component (C2) derived from the second wave (E2),
   - determination (340) of the values of the amplitude (A1, A2) of each of the components (C1, C2) by electronic processing of the received signal (S), and
   - calculation (350) of the value of the angle (α) of the first plane from the values of the amplitude (A1, A2) of each of the components (C1, C2),

   **characterised in that** the first and second electromagnetic waves (E1, E2) are transmitted simultaneously, and **in that** the antenna comprises a frame (26), a plurality of elementary antennae (14) supplied by the same source, and a transmission surface (12) carrying the elementary antennae (14), the elementary antennae (14) including first (100) and second (102) elementary antennae, each first elementary antenna (100) being adapted to transmit a first elementary wave having a first polarisation, and each second elementary antenna (102) being adapted to transmit a second elementary wave having a second polarisation, which is different from the first polarisation, and a different direction.

2. Method according to claim 1, wherein the first and second electromagnetic waves (E1, E2) have a 90° phase offset relative to one another.

3. Method according to claim 1 or 2, wherein the determination step (340) comprises mixing the received signal with an electronic signal corresponding to one of the two transmitted waves (E1, E2) and filtering the mixed signal.

4. Method according to any one of claims 1 to 3, the method further comprising a step of simultaneous transmission (300) by the antenna array (10), towards the target, of first and second electromagnetic waves (E1, E2) having a different polarisation and two different transmission directions in the second plane.

5. Method according to claim 4, wherein the method comprises a step (360) of mechanical rotation of the antenna (10) and a step of transmission (300) in the second plane.

**6.** Method according to claim 4, wherein the antenna (10) comprises a plurality of elementary antennae (14), and the method comprises a step (360) of modification of the phase offsets of the elementary antennae (14) and a step of transmission (300) in the second plane.

**7.** Method according to any one of claims 4 to 6, wherein the method comprises steps of:

- reception (310) by the antenna array (10) of a signal (S) corresponding to the reflection of the two electromagnetic waves (E1, E2) at the target, the signal (S) comprising a first component (C1) derived from the first wave (E1) and a second component (C2) derived from the second wave (E2),
- determination (340) of the values of the amplitude (A1, A2) of each of the components (C1, C2) by electronic processing of the received signal (S),
- calculation (350) of the value of the angle ($\beta$) of the second plane from the values of the amplitude (A1, A2) of each of the components (C1, C2).

**8.** Antenna array (10) for transmitting electromagnetic waves, comprising a frame (26), a plurality of elementary antennae (14) supplied by the same source, and a transmission surface (12) carrying the elementary antennae (14), the elementary antennae (14) including first (100) and second (102) elementary antennae, each first elementary antenna (100) being adapted to transmit a first elementary wave, having a first polarisation, and each second elementary antenna (102) being adapted to transmit a second elementary wave, having a second polarisation which is different from the first polarisation, **characterised in that** each second elementary antenna (102) is adapted to transmit a second elementary wave having a different direction, and **in that** the antenna (10) comprises a computing device capable of carrying out the method according to any one of claims 1 to 7.

**9.** Hyperfrequency weapon comprising an antenna array (10) according to claim 8.

FIG.1

FIG.2

EP 2 711 729 B1

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4868917 A
- JP 2010085167 A
- US 2009102704 A1
- FR 1005125

**Littérature non-brevet citée dans la description**

- **X.Q. LI.** The high power radial line helical circular array antenna: theory and development